# EUROPEAN PATENT APPLICATION

(11) **EP 4 614 428 A1**
(43) Date of publication of application: **10.09.2025**
(21) Application number: 24850255.1
(22) Date of filing: 17.12.2024
(51) Int. Cl.: G06Q 50/10, H04W 4/38, G01D 21/02, H04W 4/029, H04W 4/40, G06Q 10/08, G16Y 40/10, G16Y 10/40, G08B 21/18

(54) **DANGEROUS MATERIAL TRANSPORTATION VEHICLE CONTROL SYSTEM**

(30) Priority: 24.01.2024 KR 20240010973
(71) Applicant: Korea Gas Corporation, Daegu 41062 (KR)
(72) Inventor: KIM, Sun Hong, Dong-gu, Daegu 41128 (KR); CHO, Byoung Sun, Songpa-gu, Seoul 05764 (KR); AN, Kwang Min, Dong-gu, Daegu 41074 (KR); KIM, Geun Bae, Dong-gu, Daegu 41063 (KR); KIM, Yeong Ju, Gangseo-gu, Seoul 07610 (KR)
(74) Representative: BCKIP Part mbB
(86) International application number: PCT/KR2024/020478
(87) International publication number: WO 2025/159342

(57) **Abstract**

Provided is a control system for a hazardous material transport vehicle. The control system according to an embodiment of the present invention includes an Internet of things (IoT) module that is mounted in one area of the hazardous material transport vehicle and generates location information of the hazardous material transport vehicle on the basis of a Global Positioning System (GPS) signal, a pressure detection unit and a temperature detection unit that are installed in a manifold device for a hazardous material storage container of the hazardous material transport vehicle and respectively generate pressure information and temperature information of the hazardous material storage container, and a control server configured to receive the location information, the pressure information, and the temperature information through at least one of the IoT module, the pressure detection unit, and the temperature detection unit to monitor a location of the hazardous material transport vehicle and a dangerous state of the hazardous material storage container.

## Description

### [Technical Field]

The present invention relates to a control system for a hazardous material transport vehicle.

### [Background Art]

In Korea, there are approximately 70 accidents per year involving vehicles such as trailers and tankers transporting hazardous materials such as hydrogen gas and ammonia. These accidents are mainly caused by a lack of sufficient information about hazardous materials and response information, and there is a problem of secondary damage spreading when such an accident occurs.

In the past, in order to prevent accidents of hazardous material transport vehicles and take rapid action, a control system has been mainly operated by linking the Global Positioning System (GPS) and a control room to transmit information such as locations, arrival and departure times, and driving speeds of the transport vehicles. However, such an existing method carries the risk that a GPS communication module can become a source of ignition due to impact or malfunction. Further, tracking only the location of the transport vehicle has a limitation that it is not sufficient in terms of accident prevention.

Accordingly, there is a need for the establishment of a real-time control system that can overcome existing shortcomings and improve the safety of hazardous material transport vehicles.

### [Disclosure]

### [Technical Problem]

The present invention is directed to providing a control system for a hazardous material transport vehicle.

Objects according to the technical spirit of the present invention are not limited to the above-described object and other objects that are not described may be clearly understood by those skilled in the art from the following descriptions.

### [Technical Solution]

One aspect of the present invention provides a control system for the hazardous material transport vehicle. The system may include an Internet of things (IoT) module that is mounted in one area of the hazardous material transport vehicle and generates location information of the hazardous material transport vehicle on the basis of a Global Positioning System (GPS) signal, a pressure detection unit and a temperature detection unit that are installed in a manifold device for a hazardous material storage container of the hazardous material transport vehicle and respectively generate pressure information and temperature information of the hazardous material storage container, and a control server configured to receive the location information, the pressure information, and the temperature information through at least one of the IoT module, the pressure detection unit, and the temperature detection unit to monitor a location of the hazardous material transport vehicle and a dangerous state of the hazardous material storage container.

Further, at least one of the pressure detection unit and the temperature detection unit may be connected to the IoT module through wired or wireless communication and transmit the pressure information and the temperature information to the IoT module, and the IoT module may transmit the received pressure information and temperature information together with the location information to the control server.

Further, explosion-proof, dust-proof, and waterproof safety design suitable for type 1 gas and hydrogen gas in explosion-hazardous locations may be applied to the IoT module, the pressure detection unit, and the temperature detection unit.

Further, the IoT module may include a communication unit that receives the GPS signal and transmits at least one of the location information, the pressure information, and the temperature information to the control server, a location measurement unit that generates the location information on the basis of the GPS signal, and a battery unit that applies constant power to the location measurement unit.

Further, the IoT module may further include a vibration detection unit that detects vibration according to a condition of a road on which the hazardous material transport vehicle travels, and generates vibration information, and the control server may provide a transport accident risk notification on the basis of driving schedule information of the hazardous material transport vehicle, the location information, and the vibration information when it is determined that the hazardous material transport vehicle deployed for transport has been stopped for a predetermined reference time or longer.

Further, the IoT module may further include a removal detection unit that detects whether the hazardous material storage container or a trailer supporting the hazardous material storage container has been removed from the hazardous material transport vehicle, and the control server may provide the transport accident risk notification on the basis of the location information and a result of the detection of the removal detection unit when it is determined that the hazardous material storage container or the trailer has been removed from a location other than a predetermined specified location.

Further, explosion-proof, dust-proof, and waterproof safety design suitable for type 1 gas and hydrogen gas in explosion-hazardous locations may be applied to each of the communication unit, the location measurement unit, the vibration detection unit, the removal detection unit, and the battery unit.

Further, the control server may provide information on a periodic operational status of the hazardous material transport vehicle on the basis of the location information.

Further, the control server may map and display a location of the hazardous material transport vehicle on an electronic map on the basis of the location information.

### [Advantageous Effects]

According to embodiments of the present invention, by collecting and monitoring various pieces of information, such as location information of a hazardous material transport vehicle, pressure information, temperature information, vibration information, information on whether the hazardous material transport vehicle has been removed, etc., it is possible to check the status of the hazardous material transport vehicle, assess and predict risk, and take rapid measures against hazardous accidents.

Further, according to embodiments of the present invention, by applying explosion-proof, dust-proof, and waterproof safety designs suitable for transporting hazardous materials to an Internet of things (IoT) module, a pressure detection unit, and a temperature detection unit, it is possible to perform control functions without being damaged by accidents or hazardous situations of a hazardous material transport vehicle.

Effects according to various embodiments of the present invention are not limited to the above-described effects and other effects that are not described may be clearly understood by those skilled in the art to which the present invention belongs from the following description.

### [Description of Drawings]

To facilitate a more thorough understanding of the drawings cited in the detailed description of the present invention, a brief description of each drawing is provided.
FIG. 1 is a diagram for describing a control system for a hazardous material transport vehicle according to an embodiment of the present invention.
FIG. 2 is a block diagram of a control system for a hazardous material transport vehicle according to an embodiment of the present invention.
FIG. 3 is a diagram for describing a hazardous material transport vehicle and an Internet of things (IoT) module installed therein according to an embodiment of the present invention.
FIGS. 4 and 5 are diagrams for describing a location at which a pressure detection unit is installed and a method of installing the pressure detection unit according to an embodiment of the present invention.

### [Best Mode of the Invention]

While the technical idea of the present invention may be modified in various ways and take on various alternative forms, specific embodiments thereof are shown in the drawings and described in detail below as examples. There is no intent to limit the present invention to the particular forms disclosed. On the contrary, the technical idea of the present invention is to cover all modifications, equivalents, and alternatives falling within the spirit and scope of the appended claims.

Like reference numerals or designations in the accompanying drawings may refer to like parts or components performing substantially the same function. For convenience of description, the directions of up, down, left, and right described below are based on the drawings, and the scope of the present invention is not necessarily limited to the corresponding directions.

It will be understood that, although the terms "first," "second," etc., may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting to the present invention. As used herein, the singular forms "a" and "an" are intended to also include the plural forms, unless the context clearly indicates otherwise. It should be further understood that the terms "comprise," "comprising," "include," and/or "including," when used herein, specify the presence of stated features, integers, steps, operations, elements, parts, or combinations thereof, but do not preclude the presence or addition of one or more other features, integers, steps, operations, elements, parts, or combinations thereof.

Throughout this specification, when a part is referred to as being "connected" to another part, it includes "directly connected" and "indirectly connected" via an intervening part. Also, when a certain part "includes" a certain component, this does not exclude other components from being included unless described otherwise, and other components may in fact be included.

Further, terms described in the specification such as "part," "unit," and "module" refer to a unit of processing at least one function or operation and may be implemented as hardware or software or a combination thereof, such as a processor, a microprocessor, a microcontroller, a central processing unit (CPU), a graphics processing unit (GPU), an accelerate processor unit (APU), a digital signal processor (DSP), an application specific integrated circuits (ASIC), a field programmable gate array (FPGA), etc.

In addition, it is clear that the division of components in this specification is only a division by the main function each component is responsible for. That is, two or more components to be described below may be combined into one component, or one component may be divided into two or more parts for more detailed functions. In addition, it should be understood that each component to be described below may additionally perform some or all of the functions performed by another component in addition to the main function performed by itself, and some of the main functions performed by each component may be performed exclusively by another component.

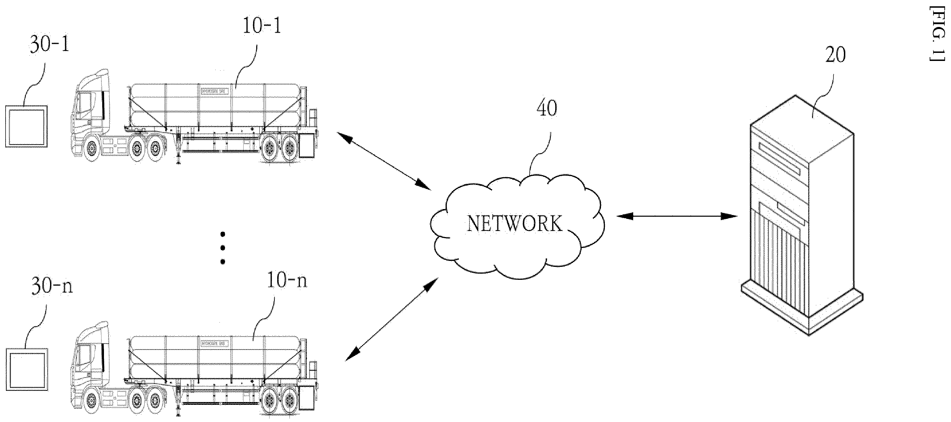

FIG. 1 is a diagram for describing a control system for a hazardous material transport vehicle according to an embodiment of the present invention.

Referring to FIG. 1, the control system for the hazardous material transport vehicle may include at least one hazardous material transport vehicle 10-1 to 10-n, a control server 20, at least one terminal 30-1 to 30-n, and a network 40.

The hazardous material transport vehicles 10-1 to 10-n may each be a trailer, tanker, etc., that is equipped with a hazardous material storage container and is intended for transporting a hazardous material. Here, the hazardous material may include, for example, hydrogen or ammonia, but the present invention is not limited thereto, and the hazardous material may include various types of gaseous or liquid hazardous materials that have an explosion risk or affect the human body or the environment. When the hazardous material is hydrogen, the hazardous material transport vehicles 10-1 to 10-n may each be a hydrogen tube trailer vehicle.

The hazardous material transport vehicles 10-1 to 10-n each include a hazardous material storage container, a trailer that supports the hazardous material storage container from below, a tractor that is connected to the trailer to move the trailer, and a manifold device that is installed at a rear end of the trailer and connected to the hazardous material storage container through a connection port to transmit or discharge a hazardous material such as hydrogen and the like to the hazardous material storage container.

Further, the hazardous material transport vehicles 10-1 to 10-n may each include a control information transmission unit for generating location information and vibration information of the vehicle, information on whether the hazardous material storage container and/or the trailer has been removed, pressure information and/or temperature information of the hazardous material storage container, etc., and transmitting the generated information to the control server 20. For example, the control information transmission unit may include an Internet of things (IoT) module that generates and transmits Global Positioning System (GPS)-based location information, vibration information of the vehicle, and information on whether a trailer or the like has been removed, and at least one pressure detection unit and at least one temperature detection unit that are connected to a pipe, a valve, or the like of the manifold device and measure the pressure and temperature of the hazardous material storage container to generate pressure information.

The control server 20 provides computing resources, storage resources, etc., to provide a hazardous material transport vehicle control service to a client directly or through another external server via the network 40. For example, the control server 20 may monitor a location of the vehicle and a dangerous state of the hazardous material storage container and/or vehicle in real time on the basis of the location information, the vibration information, the information on whether the hazardous material storage container and/or the trailer has been removed, the pressure information, the temperature information, etc., that are received from the hazardous material transport vehicles 10-1 to 10-n, and may display information and/or notifications related thereto on its own display screen or transmit the information and/or notifications to an administrator terminal and/or the terminals 30-1 to 30-n of drivers of the hazardous material transport vehicles.

In an embodiment, the control server 20 may include various types of servers, such as an application server, a control server, a server for providing a specific function, etc. Further, the control server 20 may process a process alone, or a plurality of servers may process the process.

The terminals 30-1 to 30-n may be mounted on the hazardous material transport vehicles 10-1 to 10-n, respectively, or carried by the drivers of the hazardous material transport vehicles, a monitoring manager, a specified safety manager, etc., and may include any device that can access the network 40. For example, the terminals 30-1 to 30-n may include smartphones, tablet computers, personal computers (PCs), laptop computers, wearable devices, etc.

In an embodiment, the control server 30 may transmit notifications related to the operation of the vehicle (e.g., location of a target vehicle or locations of surrounding hazardous material transport vehicles), the status of the hazardous material and vehicle (e.g., whether the pressure/temperature is abnormal, whether the vehicle is stopped abnormally, or whether the hazardous material storage container is removed abnormally), etc., to the terminals 30-1 to 30-n on the basis of the location information of the vehicle and/or the pressure information.

The network 40 may include any network that the control information transmission unit of the hazardous material transport vehicles 10-1 to 10-n, the control server 20, and the terminals 30-1 to 30-n can access, such as the Internet, an intranet, an extranet, a local area network (LAN), a metropolitan area network (MAN), a wide area network (WAN), etc.

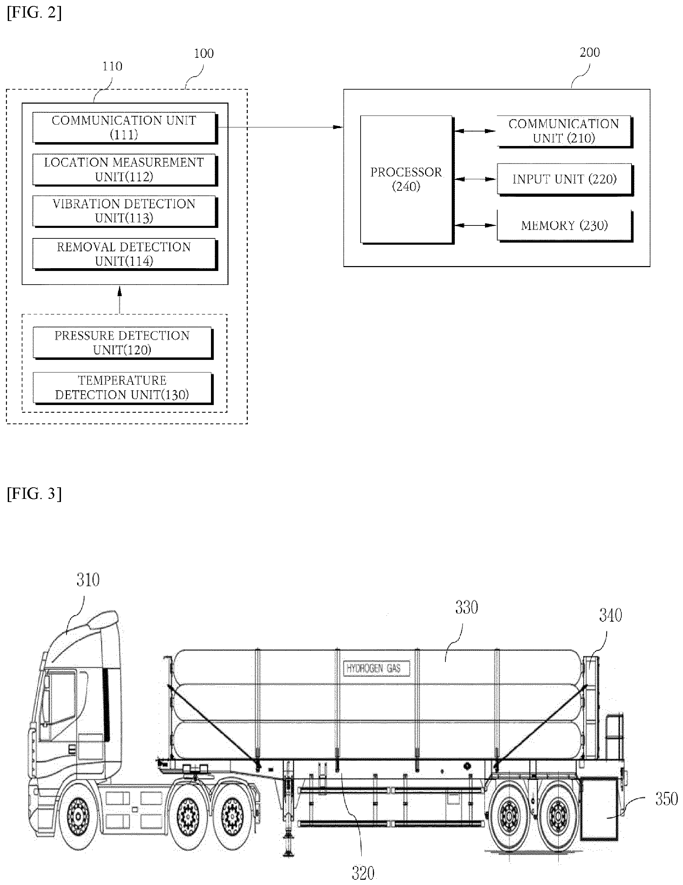

FIG. 2 is a block diagram of a control system for a hazardous material transport vehicle according to an embodiment of the present invention.

A control information transmission unit 100 of the hazardous material transport vehicle and a control server 200, which constitute the control system for the hazardous material transport vehicle, are connected through wireless communication and may transmit the above location information, vibration information, information on whether the hazardous material storage container and/or the trailer has been removed, pressure information, and/or temperature information.

The control information transmission unit 100 may include an IoT module 110, a pressure detection unit 120, and a temperature detection unit 130. In this case, explosion-proof, dust-proof, and waterproof safety designs may be applied to the IoT module 110, the pressure detection unit 120, and the temperature detection unit 130. For example, when the hazardous material transport vehicle is a hydrogen tube trailer vehicle, explosion-proof, dust-proof, and waterproof safety designs suitable for type 1 gas and hydrogen gas in explosion-hazardous locations may be applied to the IoT module 110, the pressure detection unit 120, and the temperature detection unit 130.

The IoT module 110 may generate location information of the hazardous material transport vehicle based on GPS signals and transmit the generated information to the control server 200. Further, the IoT module 110 may generate vibration information of the hazardous material transport vehicle and information on whether the hazardous material storage container and/or the trailer has been removed from the hazardous material transport vehicle and transmit the generated information to the control server 200.

The IoT module 110 may include a communication unit 111, a location measurement unit 112, a vibration detection unit 113, a removal detection unit 114, and a battery unit (not illustrated).

The communication unit 111 may transmit or receive data or signals to or from an external device or an external server. The communication unit 111 may include a wired or wireless communication unit. When the communication unit 210 includes a wired communication unit, the communication unit 111 may include one or more components that enable communication through a LAN, a WAN, a value added network (VAN), a mobile radio communication network, a satellite communication network, and a combination thereof. Further, when the communication unit 111 includes a wireless communication unit, the communication unit 111 may wirelessly transmit or receive data or signals using cellular communication, wireless LAN (e.g., Wi-Fi), etc.

In an embodiment, the communication unit 111 may receive a GPS satellite signal and transmit the received GPS satellite signal to the location measurement unit 112. Further, the communication unit 111 may transmit the location information generated by the location measurement unit 112 to the control server 200.

In an embodiment, the communication unit 111 may transmit vibration information of the hazardous material transport vehicle generated by the vibration detection unit 113 to the control server 200.

In an embodiment, the communication unit 111 may transmit information on whether the hazardous material storage container and/or the trailer has been removed, which is generated by the removal detection unit 114, to the control server 200.

In an embodiment, the communication unit 111 may transmit pressure information and temperature information that are received from the pressure detection unit 120 and/or the temperature detection unit 130 to the control server 200.

The location measurement unit 112 may calculate a location of the hazardous material transport vehicle on the basis of the GPS signals received from the communication unit 111, and generate location information of the hazardous material transport vehicle on the basis of a result of the calculation. To this end, the location measurement unit 112 may include at least one processor (or a micro controller unit (MCU)) and/or a memory. A conventional method known in the art may be applied to the process of calculating the location based on the GPS signal.

The vibration detection unit 113 may generate vibration information according to a condition of a road on which the hazardous material transport vehicle is traveling. The vibration detection unit 113 may be implemented using various vibration sensors known in the art.

The removal detection unit 114 may detect whether the hazardous material storage container is removed from the trailer or whether the trailer supporting the hazardous material storage container is removed from the tractor, and generate detection information. For example, the removal detection unit 114 may be implemented using various sensors known in the art, such as a recognition sensor (infrared sensor, optical sensor, etc.) that recognizes proximity or contact with the hazardous material storage container or trailer, a magnetic field sensor that can detect whether the hazardous material storage container or trailer has been received on the basis of a change in a magnetic field, an illumination sensor that can detect whether the hazardous material storage container or trailer has been received on the basis of the blocking or brightness of light, etc.

The battery unit may supply constant power to other components (particularly, the communication unit 111, the location measurement unit 112, the vibration detection unit 113, and the removal detection unit 114) of the IoT module 110. For example, the battery unit may be implemented using batteries known in the art, such as a lithium ion battery, a lithium polymer battery, etc.

In an embodiment, explosion-proof, dust-proof, and waterproof safety designs suitable for type 1 gas and hydrogen gas in explosion-hazardous locations may be applied to each of the communication unit 111, the location measurement unit 112, the vibration detection unit 113, the removal detection unit 114, and the battery unit. For example, the communication unit 111 and the location measurement unit 112 may be integrated into a single module, explosion-proof, dust-proof, and waterproof safety designs may be applied to the communication unit 111 and the location measurement unit 112, and the same explosion-proof, dust-proof, and waterproof safety designs may also be applied to the battery unit.

The pressure detection unit 120 and the temperature detection unit 130 may be connected to at least one point (e.g., a vent line area) of a pipe and valve of a manifold device, and may measure each of the pressure and temperature of the hazardous material storage container and pipe to generate the pressure information and temperature information of the hazardous material storage container.

At least one of the pressure detection unit 120 and the temperature detection unit 130 may be connected to the IoT module 110 through wired or wireless communication, and when the pressure detection unit 120 and/or the temperature detection unit 130 transmits the generated pressure information and temperature information to the IoT module 110, the IoT module 110 may transmit the pressure information and the temperature information together with the location information to the control server 200. The control server 200 may check whether there is an emergency eruption of a hazardous material such as hydrogen gas or the like on the basis of the pressure information and the temperature information. For example, the pressure detection unit 120 may be configured as a digital pressure gauge, and the temperature detection unit 130 may be configured as a digital thermometer.

Meanwhile, in some embodiments, the pressure detection unit 120 and/or the temperature detection unit 130 may be configured to transmit the generated pressure information directly to the control server 200 without passing through the IoT module 110. To this end, the pressure detection unit 120 and/or the temperature detection unit 130 may further include a transmitter for transmitting data.

The control server 200 may monitor a location of the hazardous material transport vehicle and/or a dangerous state of the hazardous material storage container on the basis of the location information, the vibration information, the information on whether the hazardous material storage container and/or the trailer has been removed, the pressure information, and the temperature information, which are received from the control information transmission unit 100.

The control server 200 may include a communication unit 210, an input unit 220, a memory 230, and a processor 240.

The communication unit 210 may transmit or receive data (e.g., the location information of the hazardous material transport vehicle, the vibration information, the information on whether the hazardous material storage container and/or the trailer has been removed, the pressure information, the temperature information, etc.) for providing a control service for the hazardous material transport vehicle. The communication unit 210 may include a wired or wireless communication unit. When the communication unit 210 includes a wired communication unit, the communication unit 210 may include one or more components that enable communication through a LAN, a WAN, a VAN, a mobile radio communication network, a satellite communication network, and a combination thereof. Further, when the communication unit 210 includes a wireless communication unit, the communication unit 210 may wirelessly transmit or receive data or signals using cellular communication, a wireless LAN (e.g., Wi-Fi), etc. In an embodiment, the communication unit may transmit or receive data or signals to or from an external device (e.g., the control information transmission unit 100) or an external server under the control of the processor 240.

The input unit 220 may receive various user commands through external manipulation. To this end, the input unit 220 may include or be connected to one or more input devices. For example, the input unit 220 may be connected to various input interfaces such as a keypad, a mouse, etc., to receive user commands. To this end, the input unit 220 may include not only a Universal Serial Bus (USB) port but also an interface such as Thunderbolt or the like. Further, the input unit 220 may include various input devices such as a touch screen, a button, and the like, or be combined with the input devices to receive external user commands.

The memory 230 may store programs and/or program commands for the operation of the processor 240 and may temporarily or permanently store input/output data. The memory 230 may include at least one type of storage medium among a flash memory type, a hard disk type, a multimedia card micro type, a card type memory (e.g., Secure Digital (SD) or xD-Picture Card memory, etc.), a random access memory (RAM), a static RAM (SRAM), a read-only memory (ROM), an electrically erasable programmable ROM (EEPROM), a phase-change RAM (PRAM), a magnetic memory, a magnetic disk, and an optical disc.

Further, the memory 230 may store various network functions and algorithms, and may store various pieces of data, programs (one or more instructions), applications, software, commands, code, etc., for driving and controlling the control server 200.

The processor 240 may control the overall operation of the control server 200. The processor 240 may execute one or more programs stored in the memory 230. The processor 240 may be a CPU, a GPU, a FPGA, or a dedicated processor, on which methods according to the technical idea of the present disclosure are performed.

In an embodiment, the processor 240 may receive the location information, the pressure information, and the temperature information through at least one of the IoT module, the pressure detection unit, and the temperature detection unit to monitor a location of the vehicle and a dangerous state of the hazardous material storage container.

In an embodiment, the processor 240 may provide notifications related to the location of the vehicle and the dangerous state of the hazardous material storage container to the terminal of the driver of the hazardous material transport vehicle or the terminal of the administrator (monitoring manager and safety manager) on the basis of the location information of the hazardous material transport vehicle and the dangerous state of the hazardous material storage container.

In an embodiment, the processor 240 may provide a transport accident risk notification on the basis of driving schedule information of the vehicle, the location information, and the vibration information when it is determined that the hazardous material transport vehicle deployed for transport has been stopped for a predetermined reference time or longer.

That is, when GPS-based location information indicates that the hazardous material transport vehicle does not move on a road surface such as an expressway for a certain period of time and no vibration is detected, the processor 240 may determine that a transport accident has occurred in the hazardous material transport vehicle, and display a notification regarding this on a separate display device or transmit the notification to an administrator terminal so that the administrator or the like can rapidly take action on the accident or prevent the accident from occurring.

In an embodiment, the processor 240 may provide a transport accident risk notification on the basis of the location information and a result of the detection of the removal detection unit when it is determined that the hazardous material storage container or the trailer has been removed from a location other than a predetermined specified location.

That is, since there is a risk of a major accident occurring when the hazardous material storage container or the trailer is removed from a location other than a specified location (such as an expressway or the like) such as a hazardous material charging location (such as a hydrogen charging station or the like), it is possible to enable the administrator to take measures and prevent accidents by providing a notification of the accident.

In an embodiment, the processor 240 may determine whether there is an emergency eruption of a hazardous material on the basis of the location information, the pressure information, and/or the temperature information, and may provide a transport accident risk notification when an eruption occurs at a point other than a predetermined location.

In an embodiment, the processor 240 may provide information on a periodic operational status of the hazardous material transport vehicle on the basis of the location information of the hazardous material transport vehicle.

In an embodiment, the processor 240 may map and display a location of at least one hazardous material transport vehicle on an electronic map on the basis of the location information of the hazardous material transport vehicle.

FIG. 3 is a diagram for describing a hazardous material transport vehicle and an IoT module installed therein according to an embodiment of the present invention.

Referring to FIG. 3, the hazardous material transport vehicle may be a hydrogen tube trailer vehicle transporting hydrogen, and may include a tractor 310, a trailer 320 which is connected to the tractor 310 and on which at least one hydrogen container 330 is loaded, the at least one hydrogen container 330 storing hydrogen gas, and a manifold device 340 that is coupled to the hydrogen container 330 to adjust the injection or discharge of hydrogen. The hydrogen container 330 may store high-pressure or liquefied hydrogen gas.

The manifold device 340 may be installed at an upper rear end of the trailer 320, and may include at least one connection port, pipe, valve, pressure measuring device (analog pressure gauge, digital pressure gauge), etc., coupled to the hydrogen container 330.

As illustrated in the drawings, an installation space 350 of the IoT module 110 may be provided at a lower rear end of the trailer 320 located below the manifold device 340. By connecting the IoT module 110 to the installation space 350 using a predetermined fixing bracket, the IoT module 110 may be fixed to the lower rear end of the trailer 320.

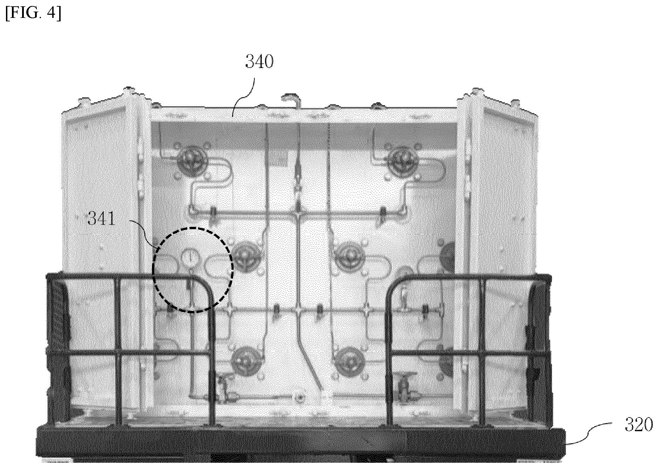

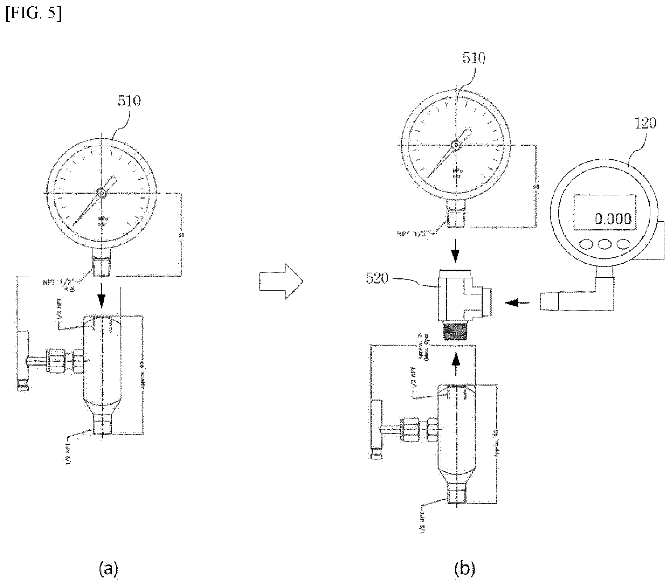

FIGS. 4 and 5 are diagrams for describing a location at which a pressure detection unit is installed and a method of installing the pressure detection unit according to an embodiment of the present invention.

Referring to FIGS. 4 and 5, a pressure detection unit 120 for generating pressure information of a hazardous material storage container may be installed at at least one location 321 of the manifold device 340.

In an embodiment, the pressure detection unit 120 may be configured as a digital pressure gauge or as a digital pressure gauge combined with a transmitter. For example, as illustrated in FIG. 5, the pressure detection unit 120 may be installed in the manifold device 340 by connecting one end portion of a T-shaped connector member 520 to a location at which an existing analog pressure gauge 510 is installed and coupling each of the analog pressure gauge 510 and the pressure detection unit 120 to the remaining end portions.

However, such an installation method is merely exemplary and the present invention is not limited thereto, and various installation methods may be modified and applied depending on the embodiments.

The particular implementations shown and described herein are illustrative examples of embodiments and are not intended to otherwise limit the scope of embodiments in any way. For the sake of brevity, conventional electronics, control systems, software development and other functional aspects of the systems may not be described in detail.

While the embodiments have been described above with reference to specific embodiments and drawings, various modifications and alterations may be made by those skilled in the art from the above description. For example, when the described technologies are performed in orders different from the described methods, and/or the described components such as a system, a structure, a device and a circuit are coupled or combined in a form different from the described method, or replaced or substituted with other components or equivalents, the appropriate result may be achieved. Further, the embodiments may be combined with each other and operated as necessary. For example, parts of one embodiment of the present invention and other embodiments may be combined with each other to operate the device. Therefore, other implementations, other embodiments and equivalents within the scope of the appended claims are included in the range of the claims to be described.

## Claims

1. A control system for a hazardous material transport vehicle, the control system comprising:
an Internet of things (IoT) module that is mounted in one area of the hazardous material transport vehicle and generates location information of the hazardous material transport vehicle on the basis of a Global Positioning System (GPS) signal;
a pressure detection unit and a temperature detection unit that are installed in a manifold device for a hazardous material storage container of the hazardous material transport vehicle and respectively generate pressure information and temperature information of the hazardous material storage container; and
a control server configured to receive the location information, the pressure information, and the temperature information through at least one of the IoT module, the pressure detection unit, and the temperature detection unit to monitor a location of the hazardous material transport vehicle and a dangerous state of the hazardous material storage container.

2. The control system of claim 1, wherein at least one of the pressure detection unit and the temperature detection unit is connected to the IoT module through wired or wireless communication and transmits the pressure information and the temperature information to the IoT module, and
the IoT module transmits the received pressure information and temperature information together with the location information to the control server.

3. The control system of claim 1, wherein explosion-proof, dust-proof, and waterproof safety design suitable for type 1 gas and hydrogen gas in explosion-hazardous locations is applied to the IoT module, the pressure detection unit, and the temperature detection unit.

4. The control system of claim 1, wherein the IoT module includes:
a communication unit that receives the GPS signal and transmits at least one of the location information, the pressure information, and the temperature information to the control server;
a location measurement unit that generates the location information on the basis of the GPS signal; and
a battery unit that applies constant power to the location measurement unit.

5. The control system of claim 4, wherein the IoT module further includes a vibration detection unit that detects vibration according to a condition of a road on which the hazardous material transport vehicle travels, and generates vibration information, and
the control server provides a transport accident risk notification on the basis of driving schedule information of the hazardous material transport vehicle, the location information, and the vibration information when it is determined that the hazardous material transport vehicle deployed for transport has been stopped for a predetermined reference time or longer.

6. The control system of claim 5, wherein the IoT module further includes a removal detection unit that detects whether the hazardous material storage container or a trailer supporting the hazardous material storage container has been removed from the hazardous material transport vehicle, and
the control server provides the transport accident risk notification on the basis of the location information and a result of the detection of the removal detection unit when it is determined that the hazardous material storage container or the trailer has been removed from a location other than a predetermined specified location.

7. The control system of claim 6, wherein explosion-proof, dust-proof, and waterproof safety design suitable for type 1 gas and hydrogen gas in explosion-hazardous locations is applied to each of the communication unit, the location measurement unit, the vibration detection unit, the removal detection unit, and the battery unit.

8. The control system of claim 1, wherein the control server provides information on a periodic operational status of the hazardous material transport vehicle on the basis of the location information.

9. The control system of claim 1, wherein the control server maps and displays a location of the hazardous material transport vehicle on an electronic map on the basis of the location information.
